# FASCICULE DE BREVET EUROPEEN

(11) **EP 2 038 521 B1**
(45) Date de publication et mention de la délivrance du brevet: **30.12.2009**
(21) Numéro de dépôt: 07766037.1
(22) Date de dépôt: 14.05.2007
(51) Int. Cl.: F01N 3/01

(54) **DISPOSITIF ET PROCEDE POUR LA CAPTURE ET L'ELIMINATION DES PARTICULES CONTENUES DANS LES GAZ D'ECHAPPEMENT D'UN MOTEUR A COMBUSTION INTERNE DE VEHICULE AUTOMOBILE**
VORRICHTUNG UND VERFAHREN ZUM AUFFANGEN UND BESEITIGEN VON IN ABGASEN AUS EINEM KRAFTFAHRZEUG-VERBRENNUNGSMOTOR ENTHALTENEN PARTIKELN
DEVICE AND METHOD FOR CAPTURING AND ELIMINATING PARTICLES CONTAINED IN THE EXHAUST GASES FROM AN AUTOMOTIVE VEHICLE INTERNAL COMBUSTION ENGINE

(30) Priorité: 12.07.2006 FR 0606347
(43) Date de publication de la demande: 25.03.2009
(73) Titulaire: Renault SAS, 92100 Boulogne Billancourt (FR)
(72) Inventeur: AGNERAY, Andre, 92100 Agneray (FR); MALEK, Nadim, 78000 Versailles (FR); PIRICI, Diana, 78180 Montigny Le Bretonneux (FR)
(86) Numéro de dépôt international: PCT/FR2007/051261
(87) Numéro de publication internationale: WO 2008/006981

(56) Documents cités:
- EP-A- 1 643 089
- EP-A- 1 669 562
- FR-A1- 2 822 893
- FR-A1- 2 841 800

## Description

L'invention concerne le traitement de composants polluants contenus dans un milieu gazeux et, en particulier, le domaine des dispositifs de filtrage des gaz d'échappement d'un moteur à combustion interne de véhicule automobile.

Plus particulièrement, l'invention se rapporte à un dispositif de capture et d'élimination de particules par un dispositif de filtrage électrostatique desdites particules contenues dans des gaz d'échappement.

Des dispositifs de filtrage de type électrostatique utilisent généralement un champ électrique pour provoquer une attraction des particules, chargées électriquement par effet de champ et par diffusion ionique, jusqu'à un substrat sur lequel les particules viennent se fixer.

A cet égard, on pourra se référer à la demande de brevet FR2798303, qui décrit un dispositif d'agglomération électrostatique de particules comprenant un filtre électrostatique à effet couronne comportant une cage cylindrique à l'intérieur de laquelle pénètrent les gaz d'échappement en vue de leur filtrage.

On connaît par le document FR 2 822 893 un système de traitement des gaz d'échappement.

On pourra également se référer au brevet américain 4 478 613, qui décrit un autre type de dispositif d'agglomération de particules comprenant un filtre électrostatique et un séparateur mécanique de particules.

Le filtre électrostatique comprend un élément tubulaire ayant une de ses extrémités fermée, et à l'intérieur duquel se trouve un empilement de disques concentriques par rapport à l'axe du tube. Le tube est maintenu à un potentiel nul, alors que les disques sont reliés à un potentiel négatif. Les gaz d'échappement pénètrent dans le tube par une ouverture et circulent axialement pour ressortir par une ouverture opposée située sur le côté.

Les disques portés à un potentiel négatif constituent une structure émissive permettant de générer un champ électrique entre eux et la surface intérieure du tube, qui est traversé par les gaz d'échappement.

Les particules contenues dans les gaz d'échappement sont ainsi chargées électriquement, et se déplacent radialement sous l'effet du champ électrique créé pour aller se déposer sur la surface intérieure du tube où elles s'amassent par couches.

D'une manière analogue, on pourra se référer au document JP-A-92 99 740 décrivant un dispositif de filtrage fonctionnant d'une manière analogue.

De même, la demande de brevet français FR-A-2 839 903 décrit également un dispositif de filtrage de gaz d'échappement pourvu d'un tel module d'agglomération électrostatique. Dans ce dispositif, le filtrage est réalisé au moyen d'un enchevêtrement de fibres métalliques perméables aux gaz qui délimitent intérieurement un passage pour les gaz et qui sont aptes à retenir mécaniquement des particules.

Cet enchevêtrement constitue également une électrode qui, conjointement avec une électrode filaire disposée selon l'axe du passage, crée un champ électrique transversal apte à dévier les particules véhiculées par les gaz d'échappement vers l'électrode externe au niveau de laquelle elles s'agglomèrent.

Une fois l'agglomération effectuée, il est nécessaire d'éliminer les particules piégées.

Ceci est généralement réalisé en utilisant un module de récupération des amas de particules, disposé en aval du module d'agglomération en considérant le sens de circulation des gaz d'échappement, qui se charge de collecter, de stocker, et d'éliminer les amas de particules qui se détachent de l'enchevêtrement de fibres dès qu'ils atteignent une taille suffisante pour que les forces de frottement exercées par les gaz d'échappement les arrachent.

Au vu de ce qui précède, l'invention se propose d'améliorer l'efficacité des dispositifs existants de filtrage et d'élimination des particules agglomérées.

La présente invention a également pour but de prévoir un dispositif permettant de capter, puis de détruire efficacement les particules véhiculées par les gaz d'échappement.

Selon un premier aspect, l'invention a donc pour objet un dispositif de capture et d'élimination des particules contenues dans les gaz d'échappement d'un moteur à combustion interne de véhicule automobile, comprenant au moins un module élémentaire de capture et d'élimination délimitant intérieurement un conduit pour les gaz d'échappement.

Le module est pourvu d'une première électrode interne, d'une seconde électrode externe, entre lesquelles est appliquée une première impulsion électrique pour créer un champ électrique sensiblement radial dans le conduit et dévier les particules vers une surface de réception des particules, d'un corps en matériau diélectrique recouvrant l'une des deux électrodes. Le module est également pourvu d'une troisième électrode disposée radialement entre les première et seconde électrodes et recouverte par le corps en matériau diélectrique, une seconde impulsion électrique étant appliquée entre les électrodes pourvues dudit corps en matériau diélectrique pour l'élimination des particules déviées sur la surface de réception.

Avec un tel dispositif, il devient dès lors possible d'obtenir une capture et une élimination des particules qui soient particulièrement simples, efficaces et économiques avec un unique moyen.

En effet, l'utilisation d'un système d'électrodes et d'un corps en matériau diélectrique qui sont communs à deux décharges à barrière diélectrique permet, tout d'abord, de dévier les particules contenues dans les gaz d'échappement en vue de leur agglomération, puis ensuite d'assurer leur mise en combustion.

Le conduit peut être raccordé directement, en entrée, au collecteur d'échappement du moteur et, en sortie, à une conduite d'évacuation des gaz d'échappement filtrés.

Dans un mode de réalisation, les première, seconde et troisième électrodes sont décalées axialement les unes par rapport aux autres.

Avantageusement, le corps en matériau diélectrique comprend la surface de réception des particules.

En ce qui concerne la première électrode interne, celle-ci peut s'étendre axialement à l'intérieur du conduit.

Dans un mode de réalisation, le dispositif comprend en outre une quatrième électrode disposée radialement entre les première et seconde électrodes et recouverte par le corps en matériau diélectrique. Avantageusement, la quatrième électrode est reliée électriquement à la troisième électrode.

Dans une variante de réalisation, le dispositif comprend une unique source d'alimentation en tension associée aux première et troisième électrodes.

En variante, le dispositif comprend deux sources d'alimentation en tension associées respectivement aux première et seconde électrodes, et aux seconde et troisième électrodes.

Selon encore un autre mode de réalisation, également combinable aux autres modes de réalisation définis ci-dessus, le dispositif comprend des moyens de protection des sources d'alimentation.

Avantageusement, le dispositif comprend plusieurs modules élémentaires d'agglomération et d'élimination montés en parallèle sur le flux des gaz d'échappement.

Selon un second aspect, l'invention a pour objet un procédé de capture et d'élimination des particules contenues dans des gaz d'échappement d'un moteur à combustion interne de véhicule automobile, dans lequel on capture les particules en appliquant une première impulsion électrique aux bornes de deux électrodes d'une barrière à décharge diélectrique, du type comportant un corps en matériau diélectrique recouvrant l'une des deux électrodes, et on élimine les particules capturées par une seconde impulsion électrique entre la deuxième électrode et une troisième électrode disposée radialement entre les première et seconde électrodes et recouverte par ledit corps de matériau diélectrique et une desdites électrodes.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe d'un dispositif de capture et d'élimination des particules contenues dans les gaz d'échappement d'un moteur à combustion interne selon l'invention ;
- la figure 2 illustre un deuxième mode de réalisation du dispositif selon l'invention ;
- la figure 3 illustre un autre mode de réalisation du dispositif selon l'invention ;
- la figure 4 illustre un quatrième mode de réalisation du dispositif selon l'invention ;
- la figure 5 illustre un système d'alimentation, électrique du dispositif selon l'invention ;
- la figure 6 illustre un cinquième mode de réalisation du dispositif selon l'invention ;
- la figure 7 illustre un autre mode de réalisation du dispositif selon l'invention;
- la figure 8 illustre un septième mode de réalisation du dispositif selon l'invention ;
- la figure 9 illustre un huitième mode de réalisation selon l'invention ;
- la figure 10 illustre un autre mode de réalisation du dispositif selon l'invention ; et
- la figure 11 illustre schématiquement un ensemble comprenant une pluralité de modules élémentaires de capture et d'élimination du dispositif selon l'invention.

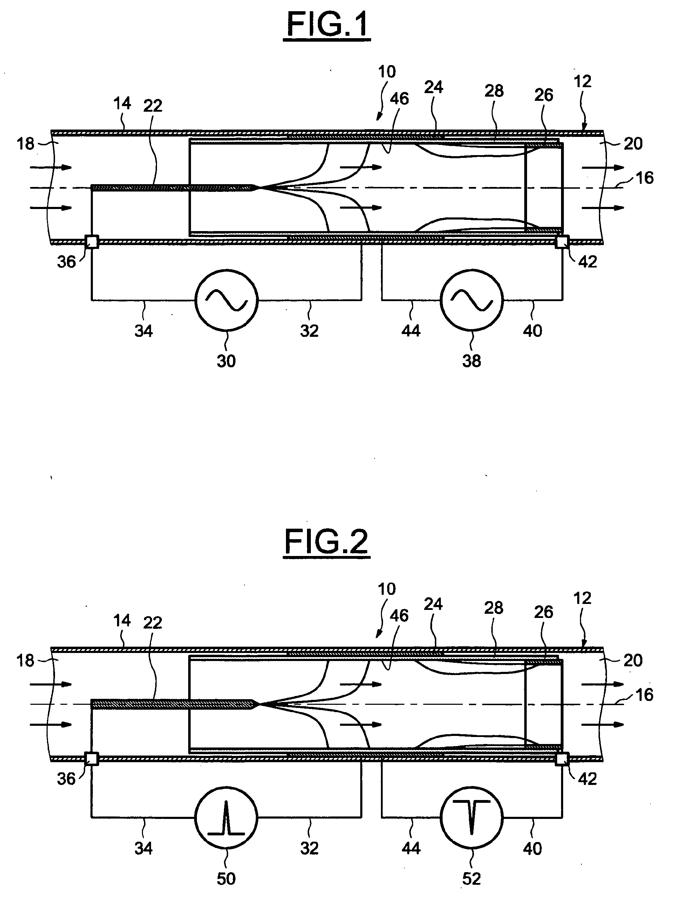

Sur la figure 1, on a représenté un dispositif de capture et d'élimination de particules contenues dans des gaz d'échappement d'un moteur à combustion interne de véhicule automobile, désigné par la référence numérique générale 10.

Ce dispositif 10 comprend essentiellement un module 12 élémentaire de capture et d'élimination délimitant intérieurement un conduit 14 pour les gaz d'échappement, à l'intérieur duquel les particules véhiculées par lesdits gaz vont être collectées puis éliminées.

Le conduit 14, délimité par une paroi généralement cylindrique, d'axe général axial 16, est muni de deux extrémités ouvertes mutuellement opposées 18 et 20 pour la fixation du dispositif à une canalisation dans laquelle circulent les gaz d'échappement à traiter.

Plus précisément, l'extrémité ouverte 18 est destinée à être directement raccordée en sortie du collecteur d'échappement du moteur à combustion interne de véhicule automobile, l'extrémité 20 étant, quant à elle, destinée à être raccordée à une conduite d'évacuation des gaz d'échappement.

De manière à permettre la collecte et l'élimination des particules véhiculées par les gaz d'échappement pénétrant dans le conduit 14 par l'extrémité 18, le dispositif 10 comprend également des première, seconde et troisième électrodes, référencées respectivement 22, 24 et 26, ainsi qu'un corps 28 réalisé en matériau diélectrique et disposé radialement entre les seconde et troisième électrodes 24 et 26.

La première électrode 22 interne se présente sous la forme d'une tige coaxiale au conduit 14, et s'étendant à l'intérieur de celui-ci. L'électrode 22 est affiné à son extrémité et se termine ici en pointe.

La seconde électrode 24 externe présente une forme générale tubulaire et est coaxiale avec l'axe 16. Elle est décalée axialement par rapport à la première électrode interne 22 en direction de l'extrémité ouverte 20, i.e. selon le sens de circulation des gaz d'échappement à l'intérieur du conduit 14. La seconde électrode 24 est fixée contre la paroi interne du conduit 14, par tout moyen approprié. La seconde électrode 24 est située entièrement à l'intérieur du conduit 14. Elle comprend des extrémités ouvertes mutuellement opposées de manière à permettre le passage des gaz à travers elles.

La seconde électrode 24 externe est reliée électriquement à une première source d'alimentation électrique en tension alternative, symbolisée par la référence 30, par l'intermédiaire d'une connexion 32. La source d'alimentation 30 est également reliée à la première électrode 22 interne par l'intermédiaire d'une connexion 34 s'étendant radialement dans le conduit 14. Un isolateur 36 est disposé sur le conduit 14 de manière à isoler électriquement la paroi de ce conduit de l'électrode interne 22.

En ce qui concerne le corps 28 en matériau diélectrique, celui-ci présente une forme générale tubulaire coaxiale avec l'axe 16 et l'électrode interne 22. Le corps 28 s'étend axialement à l'intérieur de la majeure partie du conduit 14. Il entoure radialement en partie la première électrode 22 interne et s'étend axialement en direction de l'extrémité ouverte 20, jusqu'au voisinage de celle-ci. Le corps 28 est fixé contre la paroi interne de la seconde électrode 24 par l'intermédiaire de tout moyen approprié. Le corps 28 s'étend axialement de part et d'autre de la seconde électrode 24. Le corps 28 peut par exemple être réalisé en céramique, en alumine, en vitrocéramique, ou encore en verre.

La troisième électrode 26 est disposée, quant à elle, radialement entre les première et seconde électrodes 22 et 24. Elle est décalée axialement vers l'extrémité ouverte 20 du conduit 14, en considérant la seconde électrode 24. Elle présente une dimension axiale relativement réduite par rapport à celle de la seconde électrode 24.

La troisième électrode 26 présente une forme générale tubulaire s'étendant coaxialement à l'axe 16 du conduit. Ainsi, les première et troisième électrodes 22, 26 sont coaxiales à la seconde électrode 24. La troisième électrode 26 est fixée sur la paroi interne du corps 28 en matériau diélectrique. La troisième électrode 26 est en légère saillie axiale par rapport au corps 28, du côté de l'extrémité ouverte 20.

En d'autres termes, la seconde électrode 24 est montée sur le corps 28 du côté extérieur, la troisième électrode 26 étant disposée sur ledit corps 28 du côté intérieur. L'utilisation d'un même corps 28 associé aux première, seconde et troisième électrodes 22, 24 et 26, est particulièrement économique.

La troisième électrode 26 est reliée à une seconde source d'alimentation électrique en tension 38 alternative, par l'intermédiaire d'une connexion électrique 40. Un isolateur 42 isole électriquement la paroi du conduit 14 de la troisième électrode 26. La seconde source d'alimentation 38 est également reliée à la seconde électrode 24, par l'intermédiaire d'une connexion électrique 44.

En fonctionnement, les gaz d'échappement chargés de particules pénètrent dans le conduit 14 par l'extrémité ouverte 18, et s'écoulent sensiblement axialement à l'intérieur du conduit 14 jusqu'à l'extrémité de la première électrode 22 située au voisinage de la seconde électrode 24. A partir de celle-ci, ils sont ionisés, les particules étant ainsi chargées électriquement. Les particules sont alors déviées radialement vers l'extérieur, en direction de la paroi interne du corps 28 en matériau diélectrique.

A cet égard, la seconde électrode externe 24 est maintenue à un potentiel nul, la première électrode interne 22 étant portée à un potentiel positif ou négatif. La différence de potentiel créée entre l'électrode externe 24 et l'électrode interne 22 induit la présence d'un champ électrique dans le conduit 14. Si ce champ électrique possède une intensité suffisante, en particulier au très proche voisinage de l'électrode interne 22, il se produit alors une ionisation partielle ou totale des gaz, compris axialement et radialement entre les électrodes interne 22 et externe 24. L'utilisation d'un corps 28 en matériau diélectrique oblige le courant ainsi créé à se répartir sur la surface du corps 28 en empêchant une concentration de courant en quelques points, ce qui évite le passage à l'arc en conservant un champ électrique fort.

Dans le cas d'une électrode interne 22 portée à un potentiel négatif, il est possible de prévoir un potentiel compris entre 3 et 20 kV. Dans le cas d'une électrode interne 22 portée à un potentiel positif, l'ionisation du volume compris axialement entre les électrodes interne 22 et externe 24 est possible avec une énergie à portée réduite, en portant par exemple l'électrode interne 22 à un potentiel moindre, par exemple compris entre 2 et 15 kV.

Le champ électrique quasiment homogène dans l'espace inter-électrodes dévie les particules chargées qui migrent radialement vers le corps 28 diélectrique au niveau d'une surface de réception 46 des particules constituée par une portion de la paroi interne du corps 28. Cette surface de réception 46 présente une dimension axiale sensiblement équivalente à celle de la seconde électrode 24.

Le champ électrique est hétérogène uniquement à proximité des première et seconde électrodes 22 et 24. Les particules chargées et déposées sur la surface de réception 46 s'agglomèrent par interaction électrostatique et par les forces de Van der Waals, jusqu'à ce que lesdites particules soient éliminées, notamment par l'intermédiaire de décharge utilisant la troisième électrode 26.

En effet, la troisième électrode 26 est également portée à un potentiel positif ou négatif. Ainsi, la différence de potentiel créée entre les seconde et troisième électrodes 24 et 26 génère entre ces électrodes la présence d'un champ électrique. Il existe ainsi un courant ou décharge électrique entre les seconde et troisième électrodes 24 et 26.

La valeur du potentiel auquel on maintient la troisième électrode 26 est adaptée de manière à obtenir un courant ou décharge qui permet l'élimination par combustion des particules présentes sur la surface de réception 46. A cet égard, il est par exemple envisageable de prévoir de porter la troisième électrode 26 à un potentiel compris entre 3 et 15 kV.

Dans ces conditions, après avoir obtenu la capture au niveau de la surface de réception 46 du corps 28 en matériau diélectrique, par l'intermédiaire d'une première impulsion électrique de collecte entre la première électrode interne 22 et la seconde électrode externe 24, la coopération de ladite seconde électrode externe 24 avec la troisième électrode 26 permet d'obtenir l'élimination par combustion des particules ainsi déviées par une seconde impulsion électrique de destruction ou décharge de surface, afin d'obtenir au niveau de l'extrémité ouverte 20 des gaz d'échappement dans lesquels les particules polluantes ont été sensiblement diminuées.

Ultérieurement, en fonction de la quantité de particules à détruire, la combustion peut être auto-entretenue grâce à l'énergie dégagée, et l'alimentation électrique de la troisième électrode 26 peut être coupée. Alternativement, si la combustion ne parvient pas à s'auto-entretenir, l'alimentation de la troisième électrode 26 peut être maintenue au même niveau ou maintenue à un niveau légèrement inférieur. Il est également envisageable pour minimiser l'énergie d'amorçage de la combustion de prévoir au niveau de la surface de réception 46 des particules, un revêtement catalytique.

La prévision de deux décharges à barrière électrique pourvues de trois électrodes distinctes permet de diminuer les émissions polluantes d'un moteur à combustion interne utilisé dans un véhicule automobile, de manière particulièrement efficace, économique et présentant un encombrement réduit.

En effet, le même corps diélectrique est utilisé pour couper le courant créé entre la première électrode interne 22 et la seconde électrode externe 24 par une première décharge, et entre la seconde électrode externe 24 et la troisième électrode 26 par une seconde décharge. Les décharges sont représentées schématiquement sur la figure. Par ailleurs, il devient ainsi possible d'obtenir un filtrage et une élimination des particules véhiculées par les gaz d'échappement du moteur à combustion interne avec un unique dispositif.

Dans le mode de réalisation illustré à la figure 2, sur laquelle les éléments identiques portent les mêmes références, les première et seconde sources d'alimentation 30 et 38 en tension alternative sont remplacées respectivement par une alimentation à découpage haute tension 50 à impulsion positive, et une alimentation à découpage haute tension 52 à impulsion négative. De telles alimentations à découpage sont connues en soi et peuvent être commandées de façon alternée pour permettre un fonctionnement par retournement de tension (« flyback » en langue anglaise).

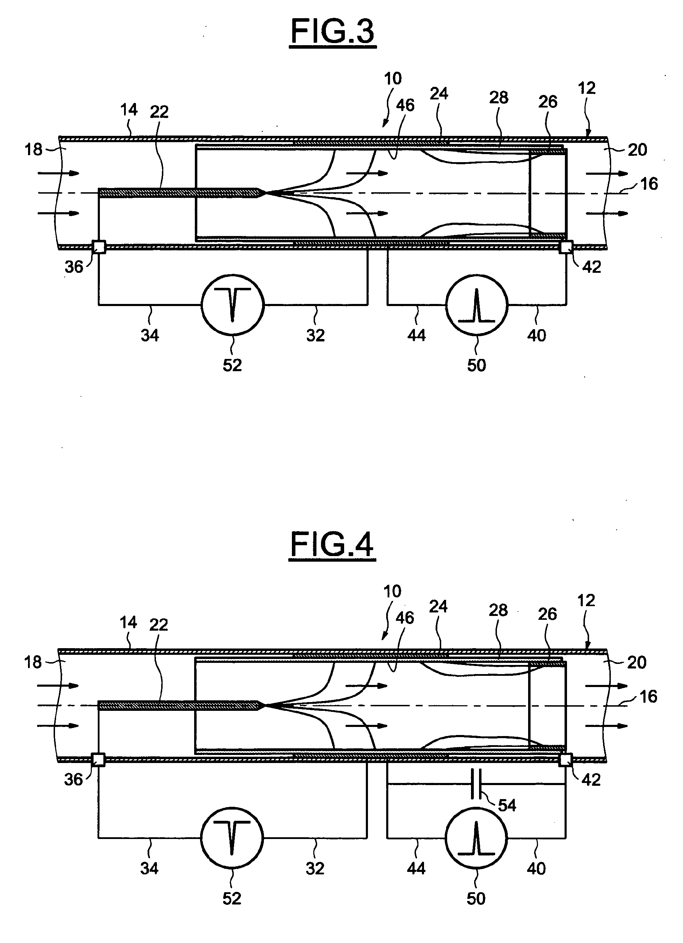

En variante, il est également envisageable de prévoir d'utiliser l'alimentation à découpage haute tension 52 à impulsion négative pour alimenter la première électrode 22, et d'utiliser l'alimentation à découpage haute tension 50 à impulsion positive pour alimenter la troisième électrode 26, comme cela est visible sur la figure 3.

Dans une variante de réalisation du mode de la figure 3, qui est illustrée à la figure 4, il est envisageable de prévoir un condensateur 54 monté en parallèle par rapport à l'alimentation à découpage haute tension 50 à impulsion positive de manière à accroître l'intensité du courant permettant l'élimination des particules au niveau de la surface de réception 46. En effet, il est possible de charger le condensateur 54 avec l'alimentation à découpage 50 haute tension, en vue de fournir des impulsions de courant produisant une phase d'arc capable de détruire les particules.

Dans une variante de réalisation, il est également possible de prévoir un système d'alimentation commun pour alimenter la première électrode 22 et la troisième électrode 26.

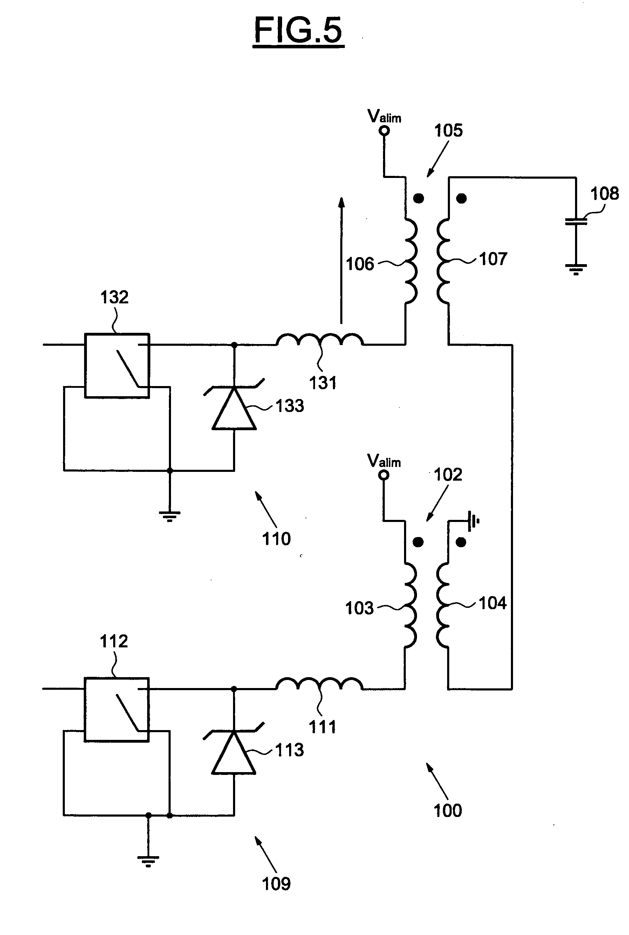

Comme on peut le voir sur la figure 5, un tel système d'alimentation 100 comprend un transformateur 102 pourvu d'un primaire 103, d'une inductance de fuite 111 et d'un secondaire 104 et un transformateur 105 pourvu d'un primaire 106, d'une inductance de fuite 131 et d'un secondaire 107. Les secondaires 104 et 107 des transformateurs 102 et 105 sont pourvus d'une borne commune. L'autre borne du secondaire 104 est reliée à la terre et l'autre borne du secondaire 107 est reliée à la sortie du dispositif d'alimentation 100, un condensateur 108 pouvant en outre être disposé entre la sortie et la masse. La capacité du condensateur 108 peut être de l'ordre de quelques dizaines de pF. La capacité est au minimum constituée par les capacités structurelles du câble haute tension, du réacteur à plasma, et du couplage capacitif entre les primaires et secondaires.

Le système d'alimentation 100 se complète par deux circuits identiques 109 et 110, reliés respectivement à l'une des bornes des primaires 103 et 106. L'autre borne des primaires 103 et 106 est reliée à une source de tension continue Valim, par exemple de l'ordre de quelques volts ou quelques dizaines de volts. Le circuit 109, 110 comprend un interrupteur 112, 132 et un limiteur de tension 113, 133. Le limiteur de tension peut être une diode Zener. L'interrupteur 112, 132 est relié à la masse d'une part, au point commun entre l'inductance 111, 131 et le limiteur de tension 113, 133 d'autre part, ainsi qu'à une entrée de commande. Dans un état, l'interrupteur de commande 112, 132 court-circuite le limiteur de tension 113, 133 et forme donc un circuit fermé entre le point commun à l'inductance 111, 131 et au limiteur de tension 113, 133 et la masse. Dans l'état opposé, l'interrupteur 112, 132 se présente comme un circuit ouvert.

Les transformateurs 102 et 105 ont un rapport de transformation de l'ordre d'une centaine. La self du primaire 103, 106 de transformateurs 102, 105 est utilisée comme élément actif d'un montage élévateur de tension obtenu par une succession de fermetures et d'ouvertures des circuits 109, 110 à une fréquence de quelques centaines d'Hz. La tension obtenue au primaire est alors de quelques centaines de volts. Par le rapport de transformation, la tension au secondaire atteint quelques dizaines de kV. Les deux primaires 103 et 106 des deux transformateurs 102 et 105 sont alimentés alternativement.

Les secondaires 104 et 107 sont connectés entre eux en série et le montage fonctionne par retour alternatif de tension. Les interrupteurs 112 peuvent comprendre un transistor de tension de puissance de faible tension. Les inductances 111 et 131 fonctionnellement font partie des circuits 109 et 110. Les inductances 111, 131 sont constituées par les selfs de fuite des transformateurs 102 et 105 ramenées au primaire. Pour la construction pratique du système d'alimentation, l'on peut donc connecter un interrupteur 112, 132 et un limiteur de tension 113, 133 disposés en parallèle directement à une borne du primaire 103, 106.

Lorsque le primaire d'un transformateur est en charge, le secondaire correspondant voit sa tension imposée par effet transformateur au produit de la tension d'alimentation du primaire par le rapport de transformation. Simultanément, le secondaire de l'autre transformateur produit par effet de retour de tension ou « flyback » une impulsion de tension de même polarité et réciproquement lorsque les commandes sont inversées. Pour plus de détails sur le fonctionnement d'un tel système d'alimentation 100, on pourra se référer à la demande de brevet français n° 05 11764 de la demanderesse.

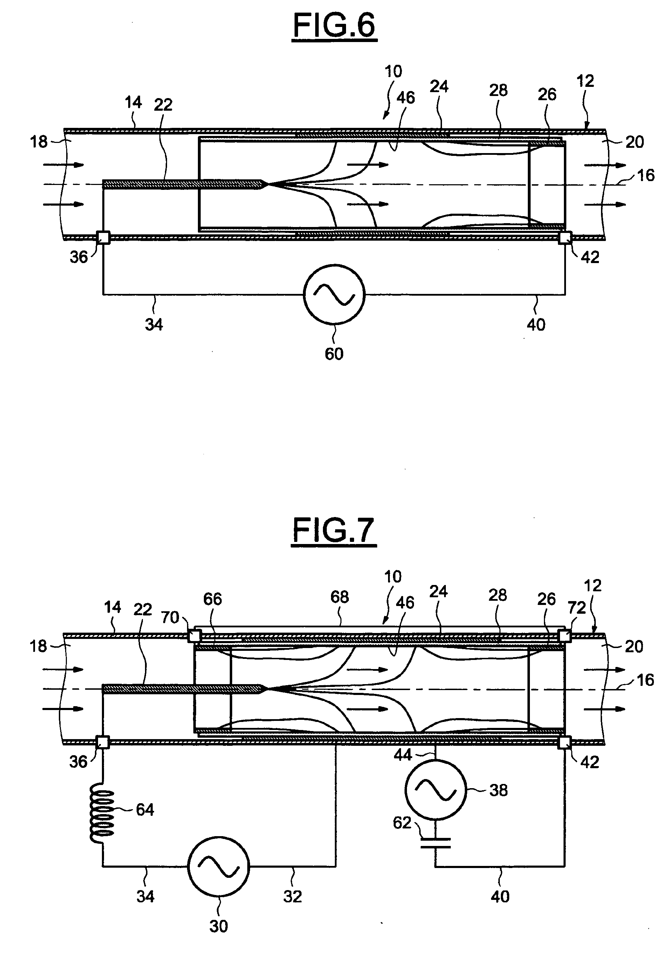

Par ailleurs, comme cela est visible sur la figure 6, selon un autre mode de réalisation, il est également possible de prévoir une unique source d'alimentation à découpage 60 haute tension alternative alimentant la première électrode interne 22 et la troisième électrode interne 26, tandis que l'électrode externe 24 est préférentiellement à un potentiel flottant.

Le mode de réalisation illustré à la figure 7 diffère du mode de réalisation de la figure 1, en ce qu'il comprend en outre des moyens de protection des sources d'alimentation 30 et 38 haute tension. Ces moyens de protection comprennent un condensateur 62 monté en série avec la source d'alimentation 38, et une bobine de protection 64 montée en série avec la source d'alimentation 30.

Dans ce mode de réalisation, le dispositif 10 comprend également une quatrième électrode disposée au niveau de la paroi interne du corps 28 en matériau diélectrique. La quatrième électrode 66 est identique à la troisième électrode 26, et reliée électriquement à celle-ci par l'intermédiaire d'une connexion électrique 68.

La quatrième électrode 66 est disposée radialement autour de la première électrode interne 22. La quatrième électrode 66 est située sur le corps 28 axialement du côté opposé à la troisième électrode 26. Des isolateurs 70 et 72 sont disposés sur le conduit 14, de manière à isoler électriquement la paroi de ce conduit des troisième et quatrième électrodes 26, 66. La quatrième électrode 66 est en légère saillie axiale par rapport au corps 28, du côté de l'extrémité ouverte 18. La disposition d'une telle électrode 66 supplémentaire permet d'accroître l'efficacité du dispositif 10 en améliorant la destruction des particules.

De manière à éviter des perturbations lors de la déviation des particules vers la surface de réception 46 et lors de l'élimination desdites particules sur cette surface, les alimentations 30 et 38 fonctionnent à des fréquences différentes et alimentent alternativement la première électrode interne 22, et les troisième et quatrième électrodes 26 et 66, respectivement.

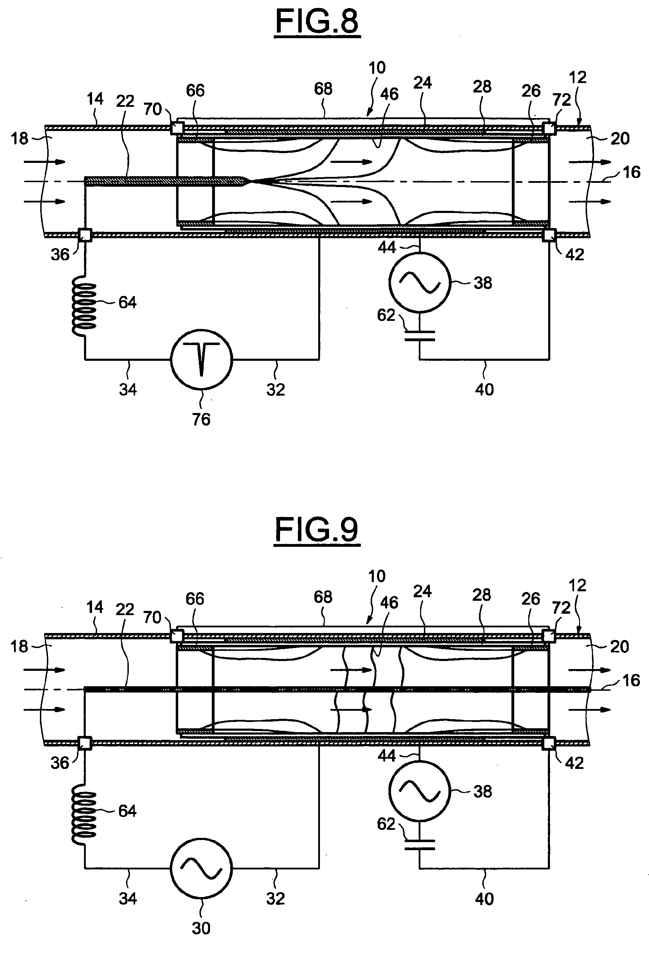

En variante du mode de réalisation précédent, il est également envisageable de prévoir en remplacement de la source d'alimentation 30 une alimentation haute tension 76 à impulsion négative, du type à découpage, comme cela est illustré sur la figure 8.

Dans un autre mode de réalisation illustré à la figure 9, dans lequel les références identiques à celles de la figure 7 ont été conservées, l'électrode interne 22 est remplacée par une électrode 70 filaire s'étendant sensiblement sur toute la longueur du conduit 14. Ceci permet notamment d'accroître la dimension axiale de la surface de réception 46. Celle-ci correspond sensiblement à la dimension axiale du corps 18.

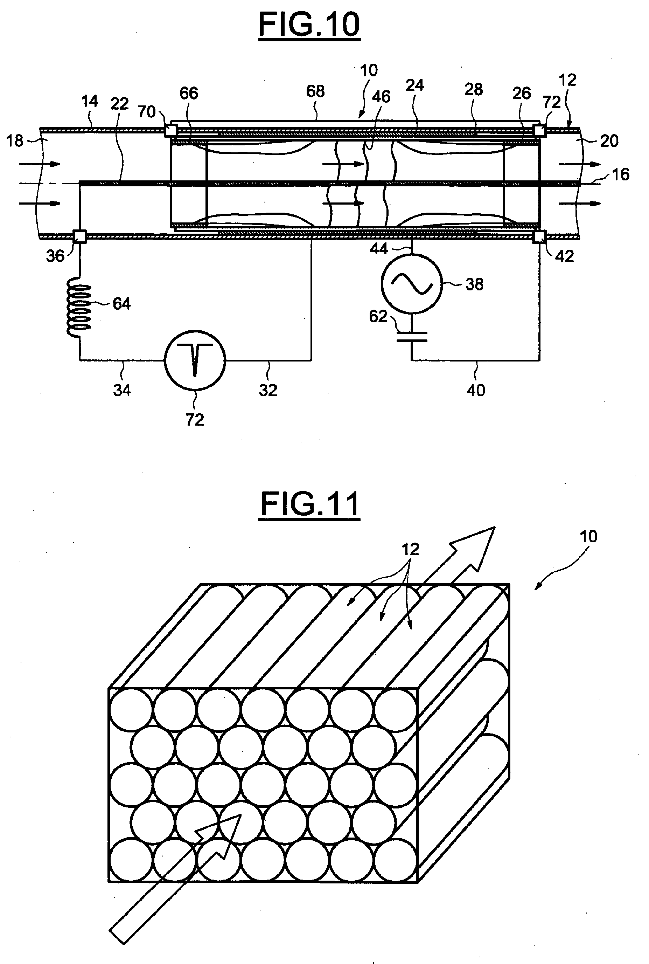

En variante, il est également envisageable de remplacer la source d'alimentation 30 par une alimentation haute tension 72 à impulsion négative (ou positive), du type à découpage, comme illustré à la figure 10.

Bien que dans l'ensemble des modes de réalisation précédemment décrits, un seul module 12 élémentaire de capture et d'élimination a été représenté, on conçoit aisément, comme illustré à la figure 10, que le dispositif 10 puisse comprendre une pluralité de modules 12 montés en parallèle sur le flux d'échappement, de manière à accroître l'efficacité du dispositif.

Grâce à l'invention, on obtient un dispositif de capture et d'élimination des particules qui comprend au moins un module élémentaire de capture et d'élimination, délimitant intérieurement un conduit pour les gaz d'échappement et pourvu d'une première électrode axiale interne, d'une seconde électrode annulaire, les électrodes étant aptes à créer un champ électrique sensiblement radial dans le conduit pour dévier les particules en direction d'une surface de réception, d'un corps en matériau diélectrique recouvrant l'une des deux électrodes, et d'une troisième électrode annulaire disposée radialement entre les première et seconde électrodes et recouverte par ledit corps en matériau électrique, les seconde et troisième électrodes étant adaptées pour permettre une combustion des particules déviées sur la surface de réception.

## Revendications

1. Dispositif de capture et d'élimination de particules contenues dans des gaz d'échappement d'un moteur à combustion interne de véhicule automobile, **caractérisé en ce qu'**il comprend au moins un module élémentaire (12) de capture et d'élimination délimitant intérieurement un conduit (14) pour les gaz d'échappement et pourvu d'une première électrode (22) interne, d'une seconde électrode (24) externe, entre lesquelles est appliquée une première impulsion électrique pour créer un champ électrique sensiblement radial dans le conduit et dévier les particules vers une surface de réception (46) des particules, d'un corps (28) en matériau diélectrique recouvrant l'une des deux électrodes, et d'une troisième électrode (26) disposée radialement entre les première et seconde électrodes et recouverte par ledit corps (28) en matériau diélectrique, une seconde impulsion électrique étant appliquée entre les électrodes pourvues du corps (28) en matériau diélectrique pour l'élimination des particules déviées sur la surface de réception (46).

2. Dispositif selon la revendication 1, dans lequel les première, seconde et troisième électrodes (22, 24, 26) sont décalées axialement les unes par rapport aux autres.

3. Dispositif selon la revendication 1 ou 2, dans lequel le corps (28) en matériau diélectrique comprend la surface de réception (46) des particules.

4. Dispositif selon l'une quelconque des revendications précédentes, dans lequel la première électrode (22) interne s'étend axialement à l'intérieur du conduit.

5. Dispositif selon l'une quelconque des revendications précédentes, comprenant, en outre, une quatrième électrode (66) disposée radialement entre les première et seconde électrodes et recouverte par le corps (28) en matériau diélectrique.

6. Dispositif selon la revendication 5, dans lequel la quatrième électrode (66) est reliée électriquement à la troisième électrode (26).

7. Dispositif selon l'une quelconque des revendications précédentes, comprenant une unique source d'alimentation (60) en tension associée aux première et troisième électrodes (22, 26).

8. Dispositif selon l'une quelconque des revendications 1 à 6, comprenant deux sources d'alimentation en tenson, associées respectivement aux première et seconde électrodes (22, 24), et aux seconde et troisième électrodes (24, 26).

9. Dispositif selon la revendication 8, comprenant des moyens de protection (64, 67) des sources d'alimentation (30, 38) en tension.

10. Dispositif selon l'une quelconque des revendications précédentes, comprenant plusieurs modules élémentaires (12) d'agglomération et d'élimination montés en parallèle sur le flux des gaz d'échappement.

11. Procédé de capture et d'élimination des particules contenues dans des gaz d'échappement d'un moteur à combustion interne de véhicule automobile, **caractérisé en ce qu'**on capture les particules en appliquant une première impulsion électrique aux bornes de deux électrodes d'une décharge à barrière diélectrique, du type comprenant un corps en matériau diélectrique recouvrant l'une des deux électrodes, et on élimine les particules capturées par une seconde impulsion électrique entre la deuxième électrode et une troisième électrode disposée radialement entre les première et seconde électrodes et recouverte par ledit corps en matériau diélectrique.

## Claims

1. Device for capturing and eliminating particles contained in the exhaust gases of a motor vehicle internal combustion engine, **characterized in that** it comprises at least one elementary capture and elimination module (12) internally delimiting a passage (14) for the exhaust gases and provided with an internal first electrode (22), with an external second electrode (24), between which electrodes a first electrical pulse is applied in order to create a substantially radial electric field in the passage and deflect the particles towards a particle-receiving surface (46) of a body (28) made of dielectric material covering one of the two electrodes, and with a third electrode (26) positioned radially between the first and second electrodes and covered by the said body (28) made of dielectric material, a second electrical pulse being applied between the electrodes provided with the body (28) made of dielectric material in order to eliminate the particles deflected onto the receiving surface (46).

2. Device according to Claim 1, in which the first, second and third electrodes (22, 24, 26) are axially offset from one another.

3. Device according to Claim 1 or 2, in which the body (28) made of dielectric material comprises the particle-receiving surface (46).

4. Device according to any one of the preceding claims, in which the internal first electrode (22) extends axially inside the passage.

5. Device according to any one of the preceding claims, further comprising a fourth electrode (66) positioned radially between the first and second electrodes and covered by the body (28) made of dielectric material.

6. Device according to Claim 5, in which the fourth electrode (66) is electrically connected to the third electrode (26).

7. Device according to any one of the preceding claims, comprising a single voltage supply source (60) associated with the first and third electrodes (22, 26).

8. Device according to any one of Claims 1 to 6, comprising two voltage supply sources, these respectively being associated with the first and second electrodes (22, 24) and with the second and third electrodes (24, 26).

9. Device according to Claim 8, comprising means (64, 67) of protecting the voltage supply sources (30, 38).

10. Device according to any one of the preceding claims, comprising several elementary agglomerating and eliminating modules (12) mounted in parallel in the stream of the exhaust gases.

11. Method for capturing and eliminating the particles contained in the exhaust gases of a motor vehicle internal combustion engine, **characterized in that** the particles are captured by applying a first electrical pulse to the terminals of two electrodes of a dielectric barrier discharge, of the type comprising a body made of dielectric material covering one of the two electrodes, and the captured particles are eliminated by a second electrical pulse between the second electrode and a third electrode positioned radially between the first and second electrodes and covered with the said body made of dielectric material.

## Patentansprüche

1. Vorrichtung zum Einfangen und Ausscheiden von in den Abgasen eines Verbrennungsmotors eines Kraftfahrzeugs enthaltenen Partikeln, **dadurch gekennzeichnet, dass** sie mindestens ein Elementarmodul (12) zum Einfangen und Ausscheiden enthält, das innen einen Kanal (14) für die Abgase begrenzt und mit einer ersten inneren Elektrode (22), mit einer zweiten äußeren Elektrode (24), zwischen denen ein erster elektrischer Impuls angelegt wird, um ein im Wesentlichen radiales elektrisches Feld im Kanal zu erzeugen und die Partikel zu einer Aufnahmefläche (46) der Partikel umzuleiten, mit einem Körper (28) aus dielektrischem Material, der eine der zwei Elektroden bedeckt, und mit einer dritten Elektrode (26) versehen ist, die radial zwischen der ersten und der zweiten Elektrode angeordnet ist und von dem Körper (28) aus dielektrischem Material bedeckt wird, wobei ein zweiter elektrischer Impuls zwischen den mit dem Körper (28) aus dielektrischem Material versehenen Elektroden zum Ausscheiden der auf die Aufnahmefläche (46) umgeleiteten Partikel angelegt wird.

2. Vorrichtung nach Anspruch 1, bei der die erste, zweite und dritte Elektrode (22, 24, 26) axial zueinander versetzt sind.

3. Vorrichtung nach Anspruch 1 oder 2, bei der der Körper (28) aus dielektrischem Material die Aufnahmefläche (46) der Partikel enthält.

4. Vorrichtung nach einem der vorhergehenden Ansprüche, bei der die erste innere Elektrode (22) sich axial innerhalb des Kanals erstreckt.

5. Vorrichtung nach einem der vorhergehenden Ansprüche, die außerdem eine vierte Elektrode (66) enthält, die radial zwischen der ersten und der zweiten Elektrode angeordnet ist und von dem Körper (28) aus dielektrischem Material bedeckt wird.

6. Vorrichtung nach Anspruch 5, bei der die vierte Elektrode (66) elektrisch mit der dritten Elektrode (26) verbunden ist.

7. Vorrichtung nach einem der vorhergehenden Ansprüche, die eine einzige Spannungsversorgungsquelle (60) enthält, die der ersten und der dritten Elektrode (22, 26) zugeordnet ist.

8. Vorrichtung nach einem der Ansprüche 1 bis 6, die zwei Spannungsversorgungsquellen enthält, die der ersten und zweiten Elektrode (22, 24) bzw. der zweiten und dritten Elektrode (24, 26) zugeordnet sind.

9. Vorrichtung nach Anspruch 8, die Schutzeinrichtungen (64, 67) der Spannungsversorgungsquellen (30, 38) enthält.

10. Vorrichtung nach einem der vorhergehenden Ansprüche, die mehrere Elementarmodule (12) zum Zusammenballen und Ausscheiden aufweist, die parallel auf den Strom der Abgase montiert sind.

11. Verfahren zum Einfangen und Ausscheiden von in den Abgasen eines Verbrennungsmotors eines Kraftfahrzeugs enthaltenen Partikeln, **dadurch gekennzeichnet, dass** die Partikel eingefangen werden, indem ein erster elektrischer Impuls an die Klemmen von zwei Elektroden einer dielektrisch behinderten Entladung von der Art angelegt werden, die einen eine der zwei Elektroden bedeckenden Körper aus dielektrischem Material enthält, und die eingefangenen Partikel durch einen zweiten elektrischen Impuls zwischen der zweiten Elektrode und einer dritten Elektrode ausgeschieden werden, die radial zwischen der ersten und der zweiten Elektrode angeordnet ist und von dem Körper aus dielektrischem Material bedeckt wird.
